# EUROPEAN PATENT SPECIFICATION

(11) **EP 1 066 343 B1**
(45) Date of publication and mention of the grant of the patent: **16.07.2003**
(21) Application number: 99916315.7
(22) Date of filing: 01.04.1999
(51) Int. Cl.: C09B 62/00

(54) **REACTIVE DYE COMPOUNDS**
REAKTIVFARBSTOFFE
COMPOSES DE COLORANTS REACTIFS

(30) Priority: 02.04.1998 WO PCT/US65/04398
(43) Date of publication of application: 10.01.2001
(73) Proprietor: THE PROCTER & GAMBLE COMPANY, Cincinnati, Ohio 45202 (US)
(72) Inventor: BROCK, Earl, David, West Chester, OH 45069 (US); LEWIS, David, Malcolm, Otley, West Yorkshire LS21 2AL (GB); YOUSAF, Taher, Iqbal, Egham, Surrey TW20 9LQ (GB)
(74) Representative: Kohol, Sonia
(86) International application number: US9907292
(87) International publication number: WO99051682

(56) References cited:
- CA-A- 771 632
- DE-A- 3 335 956
- JP-A- 60 208 367
- JP-A- 63 006 181
- LEHR F: "SYNTHESIS AND APPLICATION OF REACTIVE DYES WITH HETEROCYCLIC REACTIVE SYSTEMS" DYES AND PIGMENTS, vol. 14, no. 4, 1 January 1990 (1990-01-01), pages 239-263, XP000176926 cited in the application

## Description

The present invention relates to reactive dye compounds. In particular the present invention relates to reactive dye compounds having improved dye-bath Exhaustion (E) and improved dye-fibre covalent Fixation (F).

### Background of the Invention

Reactive dye compounds are known in the art for dyeing various substrates. Such substrates include for example proteinaceous materials such as keratin, e.g. found in hair, skin and nails and various animal body parts such as horns, hooves and feathers, and other naturally occurring protein containing materials, e.g. silk and saccharide-derived materials such as those derived from cellulose or cellulose derivatives, e.g. natural products such as cotton, and synthetic fibres such as polyamides.

Examples of classes of such reactive dyes which are well known in the art include dyes containing a mono- or dichloro- or fluoro- 1,3,5-triazinyl group, mono- or dichloro or fluoro-pyrimidyl group, beta-halogen-propionyl group, beta-halogenoethyl-sulphonyl group, beta-halogenoethylsulphamyl group, chloroacetyl amino, beta-(chloro-methyl)-beta-sulphatoethylsulphamyl group, or a vinyl sulphonyl group.

In the case of the dyes containing a triazinyl group or a pyrimidyl group, in place of the reactive halogen atoms one can use other groups which dissociate in the presence of alkali. Canadian Patent 771632, for example, discloses examples of such other groups including sulphonic acid, thiocyanate, sulphophenoxy, sulphophenyl thio, nitrosulphophenoxy groups, and quaternary ammonium groups.

Dyes and Pigments 14, 1990, pages 239-263, "Synthesis and Application of Reactive Dyes with Heterocyclic Reactive Systems" discloses fibre reactive dyes containing monochloro- or dichloro- pyrimidine heterocycle with quaternary ammonium substituents.

JP-A-60208367 relates to compounds containing at least one fiber reactive group having the formula: 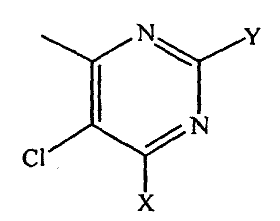 wherein X is a detachable group bonded via a hydrogen atom, halogen atom, alkyl group, alkyl sulfonyl group or nitrogen atom, Y is a detachable group bonded via a halogen atom or nitrogen atom. There is no disclosure in D1 of the specific compounds according to claim 1.
JP-A-6306181 relates to methods for dyeing cellulose type fibers or fiber materials containing cellulose type fibers. The dyes used contains one or two groups having the formula: 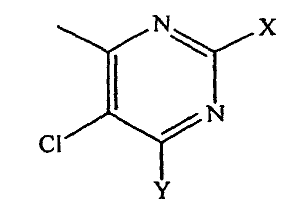 wherein X is a halogen atom, quaternized pyridine-2 or 3 -carboxamide, Y is a halogen atom, CH₃-, quaternized pyridine-2 or 3 -carboxamide and at least one of X and Y is either quaternized pyridine-2-carboxamide group or quaternized pyridine-3-carboxamide group.

There are many different types of commercially-available reactive dyes for dyeing cellulosic and polyamide-type substrates. However, a critical problem still facing the textile dye industry today is the significant level of dyestuff material which remains in the effluent waste water after the dyeing process is finished. The industry measure for this problem is known as dye-bath Exhaustion (E). A high Exhaustion value for a particular dye compound means that a low level of spent dye remains in the effluent after the dyeing process is complete, while a low Exhaustion value means that a high level of spent dye remains in the effluent. There is clearly a need therefore for new dye compounds which have higher Exhaustion Values compared with commercially available dye compounds, and which provide benefits in terms of reducing levels of spent dyestuff in effluent water.

As well as having a high Exhaustion Value, it is also important for a dye compound to have a high dye-fibre covalent Fixation Value (F): The Fixation Value (F) of a dye compound is a measure of the dye affinity at the substrate surface or in other words the percentage of dye removed from the substrate by the so-called post-dyeing "soaping off process", based on the dye originally absorbed during the dyeing process. Thus there if clearly a need to provide dye compounds having increased Fixation Values. A high Fixation Value can result in a simplification of the post dyeing "soaping off process" traditionally associated with fiber reactive dye compounds. In particular, a high Fixation Value can result in a reduced time spent on the "soaping off process" together with a reduced cost.

It has now been surprisingly found that anew class of fibre reactive dye compounds comprising a monofluoropyrimidine heterocycle or a monochloromonofluoro pyrimidine heterocycle substituted with at least one quaternized nitrogen derivative such as nicotinate, exhibit significantly increased values of Exhaustion (E) and Fixation (F), particularly on cellulosic substrates such as cotton, and show significant improvements in terms of reducing spent dyestuff in effluent, increasing dye affinity to the substrate, increasing the efficiency of the dye-substrate covalent reaction, and simplifying the post dyeing "soaping off process" traditionally associated with fibre reactive dyes. In addition, the compounds of the present invention provide significantly more intense dyeings, and can be used for both high and low temperature dyeing. Furthermore, the compounds of the present invention can be used together with specific chromophores for cotton dyeing using significantly reduced levels of salt needed for dyeing.

### Summary of the Invention

According to the present invention there is provided a reactive dye compound according to claim 1.

The compounds of the present invention exhibit increased Exhaustion (E) and Fixation (F) values and provide improvements in terms of reducing spent dyestuff in effluent, increasing dye affinity to the substrate, and simplifying the post dyeing "soaping off process" traditionally associated with fiber reactive dyes. In addition, the compounds of the present invention provide significantly more intense dyeings.

### Detailed Description of the Invention

As used herein the term "reactive dye" means a dye containing a one or more reactive groups, that is to say one or more groups capable of forming covalent bonds with the substrate to be dyed, or a dye which forms such a group in situ.

As used herein the term "Exhaustion" in relation to fibre reactive dyes means the percentage of dye which is transferred from a solution of the dye to the substrate to be treated at the end of the dyeing process, before rinsing and soaping. Thus 100% Exhaustion means that 100% of the dye is transferred from the dye solution to the substrate.

As used herein the term "Fixation" in relation to reactive dyes means the percentage of dye which covalently bonds with the substrate, based on the dye originally absorbed during the dyeing process. Thus 100% Fixation means that 100% of the dye absorbed is covalently bonded with the substrate.

Reactive dye compounds of the present invention may be represented by the following formula (I): 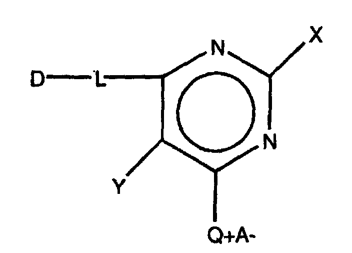 wherein:
D is a chromophore group;
L is a linking moiety;
Q+ is a quaternized nitrogen derivative, wherein the precursor to introduce Q+ is selected from nicotinate, isonicotinate, DABCO, and dimethylaminobetaine;
X and Y are independently selected from chlorine, bromine, fluorine or hydrogen;
A is selected from halogen, preferably chlorine or fluorine;
   provided that at least one of X and Y is fluorine;
and salts and esters thereof.

### Chromophore Moiety

Any chromophore moieties suitable for use for dyeing substrates can be used in the present invention.

Any chromophore moieties suitable for use for dying substrates can be used in the present invention. The term chromophore as used herein means any photoactive compound and includes any coloured or non-coloured light absorbing species, e.g. fluorescent brighteners, UV absorbers, IR absorbing dyes.

Suitable chromophore moieties for use in the dye compounds herein include the radicals of monoazo, disazo or polyazo dyes or of heavy metal complex azo dye derived therefrom or of an anthraquinone, phthalocyanine, formazan, azomethine, dioxazine, phenazine, stilbene, triphenylmethane, xanthene, thioxanthene, nitroaryl, naphthoquinone, pyrenequinone or perylenetetracarbimide dye.

Suitable chromophore moieties for use in the dye compounds herein include those disclosed in EP-A-0,735,107 (Ciba-Geigy), incorporated herein by reference, including the radicals described therein which contain substituents customary for organic dyes, such as sulphonate substituents which enhance the water-soluble properties of the dye compound.

Most preferred chromophore D groups for use herein are polysulphonated azo chromophores such as those present Drimalan (RTM) dyes commercially available from Clariant and Drimarene (RTM) dyes commercially available from Clariant.

### Linking Moiety

The compounds herein further comprise a linking moiety to link the pyrimidine heterocycle to the chromophore moiety. Any linking moieties suitable for use in dyeing substrates can be used in the present invention. Preferably the linking moiety is selected from NR, NRC=O, C(O)NR, NRSO₂ and -SO₂NR wherein R is H or C₁-C₄ alkyl which can be substituted by halogen, preferably fluorine or chlorine, hydroxyl, cyano, C₁-C₄ alkoxy, C₂-C₅ alkoxycarbonyl, carboxyl, sulfamoyl, sulfo or sulfato. A preferred linking moiety is NR, preferably where R is H or CH₃, especially H.

Suitable quaternized nitrogen derivatives for use herein can be represented by Q+ wherein the precursor to introduce Q+ is selected from nicotinate, diazabicyclooctane (DABCO), dimethylaminobetaine and isonicotinate, especially nicotinate.

The quaternized nitrogen derivative is attached to the nitrogen-containing heterocycle via its tertiary nitrogen atom.

X and Y are substituents on the pyrimidine ring and are independently selected from fluorine, chlorine, bromine or hydrogen. However, at least one of X and Y must be fluorine. In preferred embodiments, X is selected from chlorine or hydrogen, especially chlorine and Y is fluorine.

In the above general formula (I), the X, Y and Q+A- groups can be attached to any of the three available ring carbon atoms. However, in particularly preferred embodiments, the compounds herein have the formula (II) below: 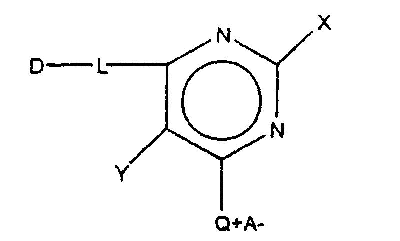 where D, L, Y, X, Q and A are as defined above, and wherein X, Y and Q+A- are attached to defined positions on the ring as shown, which compounds can be prepared from commercially available starting materials such as Drimalan (RTM) and Drimarene (RTM) dyes from Clariant.

The present invention furthermore relates to processes for the preparation of dyes having the formula (I) and (II) above. In general, these dyes can be prepared by reacting suitable precursors of the dye of formula (I) or (II) with one another, at least one of which contains a group D-L-pyrimidine, wherein D, and L are as defined above, and at least one of which contains a Q group (wherein Q is as defined above).

Dye compounds of the invention having a formula (I) or (II) wherein X is fluorine and Y is chlorine can be prepared by reacting a difluoromonochloro pyrimidine dye such as those commercially available from Clariant under the tradenames Drimalan (RTM) and Drimarene (RTM), with a suitable reactant containing a Q group.

The reactions of the starting dye compounds with the reactant containing a Q group are generally carried out at a pH of from about 5 to about 6, and at a temperature of about 40-45C.

The dye compounds herein are suitable for dyeing and printing a wide variety of substrates, such as silk, leather, wool, polyamide fibers and polyurethanes, keratin fibres such as hair, and in particular cellulosic materials, such as the natural cellulose fibres, cotton, linen, hemp and the like, paper, and also cellulose itself and regenerated cellulose, and hydroxyl-containing fibres contained in blend fabrics, for example blends of cotton with polyester or polyamide fibres.

The dye compounds of the present invention can be applied and fixed to the substrate in various ways, in particular in the form of aqueous dye solutions and printing pastes. Thus according to the present invention there is provided a dye composition comprising one or more of the dye compounds described herein together with any carrier material suitable for use in a dye composition.

Preferred dye compositions herein comprise an acidic buffer material. Any acidic buffer suitable for use in dye compositions can be used herein. An example of a suitable buffer is a mixed phosphate buffer.

When the dye composition herein is in the form of a paste a preferred ingredient is a thickening agent. Any suitable thickening agents suitable for use in dye compositions can be used herein.

When the dye composition is in the form of an aqueous solution or aqueous gel/paste, the dye composition preferably has a pH of about 5 or less, preferably from about 2 to about 3.

When the dye composition is being used for dyeing hair, the composition can comprise one or more of the compounds described herein either alone or in admixture with other well known hair dye compounds such as oxidative dyes, direct dyes, and the like.

The dyeing and printing processes which can be used with the dyes herein are conventional processes which are well known and which have been widely described in the technical and patent literature. The dye compounds herein are suitable for dyeing both by the exhaust method and also by the pad-dyeing method, whereby the goods are impregnated with aqueous, salt-containing or salt-free dye solutions and the dye is fixed after an alkali treatment or in the presence of alkali, if appropriate with the application of heat. The dye compounds herein are also suitable for the cold pad-batch method, after which the dye together with the alkali is applied to the pad-mangle and then fixed by several hours of storage at room temperature. After fixing, the dyeings or prints are thoroughly rinsed with cold and hot water, if appropriate with the addition of an agent acting as a dispersant and promoting the diffusion of the non-fixed portions.

Thus in accordance with another aspect of the present invention there is provided a use of the reactive dyes of the present invention for dyeing and printing substrates such as cellulosic substrates such as cotton, wool, polyamides such as nylon, polyesters, polyurethanes, silk, keratin such as hair, leather, paper, and the like. The compounds herein can be used in methods of dyeing all of the substrates listed above by applying an aqueous solution of one or more of the reactive dyes of the present invention to the substrate to be dyed under suitable conditions of pH and temperature.

The following examples serve to illustrate the compounds of the present invention.

The starting compounds and components given in the examples below can be used in the form of the free acid or in the form of their salts.

### Examples

### Example 1

The 5-chloro-4-nicotinyl-2-fluoro pyrimidine dye is prepared using the synthesis route as illustrated in Diagram 1.

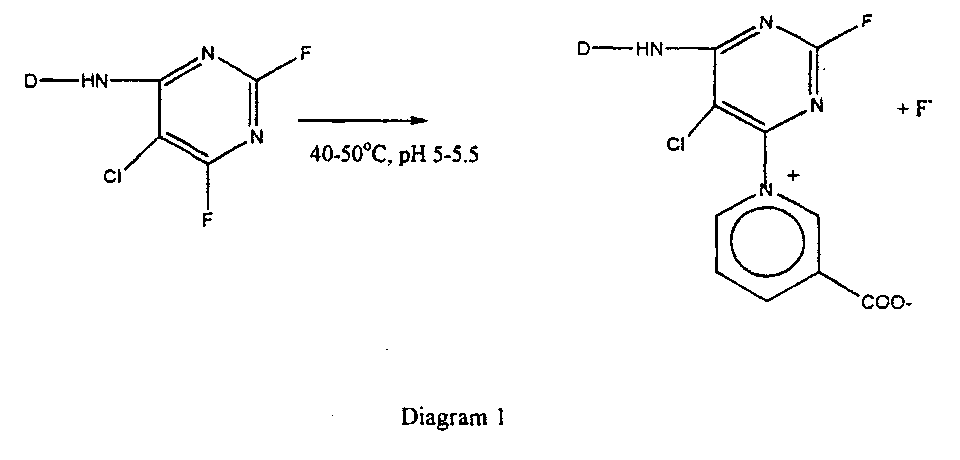

In the reaction scheme D is a chromophore and varies depending on which starting dye is used. In the present example Drimarene Brill Red 4-KBL is used as the starting material. However any suitable pyrimidine containing dye can be used as a starting material including any Drimalan F dye, any Drimarene R dye and any Drimarene K dye commercially available from Clariant.

### Synthesis of 5-chloro-4-nicotinyl-2-fluoro pyrimidine dye

0.1 moles of pure Drimarene Brill Red K-4BL dye and 150ml of distilled water is introduced into a flask. 0.1 moles of nicotinic acid is then added dropwise to the reaction mixture under stirring, from a dripping funnel. The total addition time is 1-1.5 hours. The pH of the reaction system is maintained at pH 5-5.5 and the temperature of the reaction system 40-45°C, throughout the addition of nicotinic acid.

The reaction is then allowed to proceed at 40-45°C and pH5-5.5 (which is corrected using sodium carbonate and HCl) for 3-4 hours. The end-of-reaction point for this part of the synthesis is indicated by the pH of the reaction system remaining constant for more than 5 minutes. At this point, the 5-chloro-4-nicotinyl-2-fluoro pyrimidine dye is obtained. Using 6N HCl, the pH of the system is then reduced to below pH 2 to terminate the reaction. KCI (≅35% of the total solution) is then added to the reaction mixture in order to precipitate the dye, Filtration using Whatman filter paper follows. The precipitate is then washed with acetone 4-5 time (≅50ml of acetone was used each time) to obtain the 5-chloro-4-nicotinyl-2-fluoro pyrimidine dye.

The compounds prepared above have high Exhaustion Values, high Fixation Values, particularly on cellulosic substrates such as cotton, and show significant improvements in terms of reducing spent dyestuff in effluent, increasing dye affinity to the substrate, increasing the dye-substrate covalent bonding, increasing the ability to dye substrates at room temperature, decreasing the amount of dye that is removed during the post dyeing "soaping off process" and therefore simplying the post dyeing "soaping off process" traditionally associated with dyeing cotton with fibre reactive dyes and reduction of staining of adjacent white fabrics. In addition, the compounds prepared above provide more intense dyeings and require less levels of salt for dyeing cotton substrates.

### Example 2

All dye compounds prepared according to Example 1 above can be used to dye cotton using the dyeing procedures detailed below. After the cotton dyeing procedure has been carried out a soaping-off process can also be carried out on the cotton fibre.

### Cotton dyeing procedure

An aqueous dye solution is prepared containing a dye compound according to Example 1. The dye solution contains 1.2% on mass of fibre of dye, 80g/L Na₂SO₄ and 5% on mass of fibre of sodium acetate. The cotton fabrics are soaked in water and then the cotton fabrics are dyed in the above dye-bath at pH 7 at 25 °C for 30 minutes. The dyed cotton fabric is then fixed in the dye-bath at pH 11.5 with addition of 30g/L of sodium formate and 5g/L Na₂CO₃ and dyeing continued at 25°C for 30 minutes. The dyed fabric is rinsed with water.

In the above dyeing procedure the dye bath for each dye compound is almost totally exhausted, indicating that the compounds prepared according to Example 1 each have a high Exhaustion Value.

### Soaping-off process

A soaping off process can then be carried out by washing the dyed fabrics with an aqueous solution of Sandozine NIE (2g/L) at 100°C for 30 minutes.

In the above soaping-off process hardly any colour was removed from the fabric indicating that the compounds prepared according to Example 1 each have a high degree of dye -fibre covalent bonding and a high Fixation Value.

### Co3 (International Standards Organisation) Wash Fastness Test

The dyed fabrics are washed with an aqueous solution containing ECE Reference Detergent (5g/ml) and sodium carbonate (2g/ml) at 60°C for 30 minutes.

In the above wash fastness test, no noticeable colour was removed from the cotton fibre and no staining of the white adjacent fibres occurred (using Multiple Fibre adjacent strip supplied by SDC Bradford).

### Example 3

All dye compounds prepared according to Example 1 can be used to dye nylon or wool using the dyeing procedures detailed below. After the nylon/wool dyeing procedure has been carried out a wash-test procedure can be carried out on the dyed fabric to test the wash-fastness of the dye compounds.

### Wool/Nylon Dyeing Procedure

The wool/nylon fabric is soaked in a 2% Alcopol-O (40% w/w sodium-d-isooctylsulphate succinate -commercially available from Allied Colloids) solution. The fabric is then dyed for 1 hour at 100°C and pH 3.5 in a dye-bath containing the following compositions: 1.2% on mass of fibre of dye prepared according to any of Examples 1 to 14, 5% on mass of fibre of sodium acetate, 1% Albegal B (commercially available from Ciba Geigy). The dyed wool/nylon fabric was then rinsed with water.

In the above procedure intense dyeings are provided for each of the compounds prepared according to Example 1.

### Co2 (ISO) Wash Fastness Test Procedure for Wool/Nylon Fabrics

The dyed wool/nylon fabric is washed in an aqueous solution containing 5g/L of ECE Reference Detergent (commercially available from Society of Dyers and Colourists, Bradford, UK) at 50°C for 45 minutes.

In the above wash fastness test, no noticeable colour was removed from the wool fibre and no staining of the white adjacent fibres occurred ((using Multiple Fibre adjacent strip supplied by SDC Bradford).

## Claims

1. Reactive Dye compound having the formula: 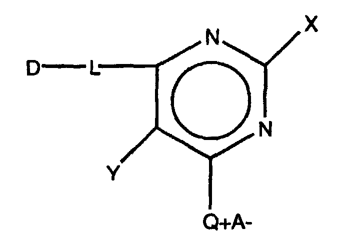 wherein:
D is a chromophore group;
L is a linking moiety;
Q+ is a quaternized nitrogen derivative, wherein the precursor to introduce Q+ is selected from nicotinate, isonicotinate, DABCO, and dimethylaminobetaine;
X and Y are independently selected from chlorine, bromine, fluorine or hydrogen;
A is selected from halogen, preferably chlorine or fluorine;
provided that at least one of X and Y is fluorine;
and salts and esters thereof.

2. A reactive dye according to Claim 1 wherein the precursor to introduce Q+ is nicotinate.

3. A reactive dye according to any of Claims 1 to 2 wherein X is chlorine or hydrogen, preferably chlorine.

4. A reactive dye according to any of Claims 1 to 3 wherein the linking moiety is selected from NR, NRC=O and NRSO₂ wherein R is H or C1-C4 alkyl which can be substituted by halogen, preferably fluorine or chlorine, hydroxyl, cyano, C1-C4 alkoxy, C2-C5 alkoxycarbonyl, carboxyl, sulfamoyl, sulfo or sulfato.

5. A reactive dye according to Claim 4 wherein the linking moiety is NR.

6. A reactive dye according to Claim 5 wherein R is C1-C4 alkyl or H, preferably H.

7. The use of a reactive dye according to any of Claims 1 to 6 for the dyeing and printing of cellulosic substrates such as cotton.

8. The use of a reactive dye according to any of Claims 1 to 6 for the dyeing and printing of wool.

9. The use of a reactive dye according to any of Claims 1 to 6 for the dyeing and printing of polyamides such as nylon.

10. The use of a reactive dye according to any of Claims 1 to 6 for the dyeing and printing of silk.

11. The use of a reactive dye according to any of Claims 1 to 6 for the dyeing and printing of keratin such as wool and hair.

12. The use of a reactive dye according to any of Claims 1 to 6 for the dyeing and printing of leather.

13. The use of a reactive dye according to any of Claims 1 to 6 for the dyeing and printing of paper.

14. A dye composition comprising the compound of any of Claims 1 to 6.

15. A dye composition according to Claim 14 wherein the composition is in the form of a solid mixture and further comprises an acid buffer.

16. A dye composition according to Claim 14 wherein the composition is in the form of a liquid and further comprises water and an acid buffer.

17. A dye composition according to Claim 16 wherein the composition is in the form of a paste and further comprises water, thickening agent and an acid buffer.

18. A dye composition according to Claim 14, 16, or 17 wherein the composition has a pH of about 5 or less, preferably from about 2 to about 4, preferably from about 2 to about 3.

## Patentansprüche

1. Reaktive Farbstoffverbindung der Formel: 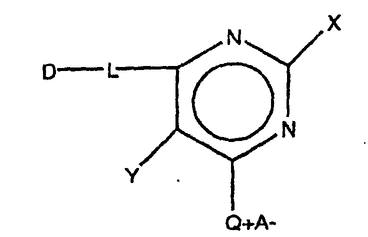 worin:
D eine Chromophorengruppe ist;
L eine Verbindungseinheit ist;
Q+ ein quaternisiertes Stickstoffderivat ist, wobei der Vorläufer zur Einführung von Q+ aus Nikotinat, Isonikotinat, DABCO und Dimethylaminobetain gewählt ist;
X und Y unabhängig aus Chlor, Brom, Fluor oder Wasserstoff gewählt sind;
A aus Halogen, vorzugsweise Chlor oder Fluor, gewählt ist;
vorausgesetzt, dass mindestens eines von X und Y Fluor ist;
und Salze und Ester hiervon.

2. Reaktiver Farbstoff nach Anspruch 1, wobei der Vorläufer zur Einführung von Q+ Nikotinat ist.

3. Reaktiver Farbstoff nach mindestens einem der Ansprüche 1 bis 2, wobei X Chlor oder Wasserstoff ist, vorzugsweise Chlor.

4. Reaktiver Farbstoff nach mindestens einem der Ansprüche 1 bis 3, wobei die Verbindungseinheit gewählt ist aus NR, NRC=O und NRSO₂, worin R H oder C1-C4-Alkyl ist, das substituiert sein kann durch Halogen, vorzugswelse Fluor oder Chlor, Hydroxyl, Cyano, C1-C4-Alkoxy C2-C5-Alkoxycarbonyl, Carboxyl, Sulfamoyl, Sulfo oder Sulfato.

5. Reaktiver Farbstoff nach Anspruch 4, wobei die Verbindungseinheit NR ist.

6. Reaktiver Farbstoff nach Anspruch 5, wobei R C1-C4-Alky oder H ist, vorzugsweise H.

7. Verwendung eines reaktiven Farbstoffs nach mindestens einem der Ansprüche 1 bis 6 zum Färben und Bedrucken von cellulosischen Substraten, wie Baumwolle.

8. Verwendung eines reaktiven Farbstoffs nach mindestens einem der Ansprüche 1 bis 6 zum Färben und Bedrucken von Wolle.

9. Verwendung eines reaktiven Farbstoffs nach mindestens einem der Ansprüche 1 bis 6 zum Färben und Bedrucken von Polyamiden, wie Nylon.

10. Verwendung eines reaktiven Farbstoffs nach mindestens einem der Ansprüche 1 bis 6 zum Färben und Bedrucken von Seide.

11. Verwendung eines reaktiven Farbstoffs nach mindestens einem der Ansprüche 1 bis 6 zum Färben und Bedrucken von Keratin, wie Wolle und Haar.

12. Verwendung eines reaktiven Farbstoffs nach mindestens einem der Ansprüche 1 bis 6 zum Färben und Bedrucken von Leder.

13. Verwendung eines reaktiven Farbstoffs nach mindestens einem der Ansprüche 1 bis 6 zum Färben und Bedrucken von Papier.

14. Farbstoffzusammensetzung, umfassend die Verbindung nach mindestens einem der Ansprüche 1 bis 6.

15. Farbstoffzusammensetzung nach Anspruch 14, wobei die Zusammensetzung in Form einer Feststoffmischung vorliegt und weiterhin einen Säurepuffer umfasst.

16. Farbstoffzusammensetzung nach Anspruch 14, wobei die Zusammensetzung in Form einer Flüssigkeit vorliegt und weiterhin Wasser und einen Säurepuffer umfasst.

17. Farbstoffzusammensetzung nach Anspruch 16, wobei die Zusammensetzung in Form einer Paste vorliegt und weiterhin Wasser, Verdickungsmittel und einen Säurepuffer umfasst.

18. Farbstoffzusammensetzung nach Anspruch 14, 16 oder 17, wobei die Zusammensetzung einen pH von etwa 5 oder weniger, vorzugsweise etwa 2 bis etwa 4, vorzugsweise etwa 2 bis etwa 3, besitzt.

## Revendications

1. Composé de matière colorante réactive de formule: 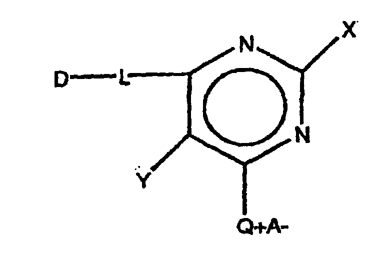 dans laquelle:
D est un groupe chromophore;
L est un groupement de liaison;
Q⁺ est un dérivé azoté quaternisé, dans lequel le précurseur utilisé pour introduire Q⁺ est choisi parmi un nicotinate, un isonicotinate, le DABCO et la diméthylaminobétaïne;
X et Y sont indépendamment choisis parmi le chlore, le brome, le fluor ou l'hydrogène;
A est choisi parmi un halogène, de préférence le chore ou le fluor;
pourvu qu'au moins l'un des substituants X et Y soit un fluor;
et sels et esters de celui-ci.

2. Matière colorante réactive selon la revendication 1, dans laquelle le précurseur utilisé pour introduire Q⁺ est un nicotinate.

3. Matière colorante réactive selon l'une quelconque des revendications 1 à 2, dans laquelle X est un chlore ou un hydrogène, de préférence un chlore.

4. Matière colorante réactive selon l'une quelconque des revendications 1 à 3, dans laquelle le groupement de liaison est choisi parmi NR, NRC=O et NRSO₂, où R représente H ou un groupe alkyle en C1-C4, qui peut être substitué par un halogène, de préférence un fluor ou un chlore, un groupe hydroxyle, cyano, alcoxy en C1-C4, alcoxycarbonyle en C2-C5, carboxyle, sulfamoyle, sulfo ou sulfato.

5. Matière colorante réactive selon la revendication 4, dans laquelle le groupement de liaison est NR.

6. Matière colorante réactive selon la revendication 5, dans laquelle R est un groupe alkyle en C1-C4 ou H, de préférence H.

7. Utilisation d'une matière colorante réactive selon l'une quelconque des revendications 1 à 6, pour la teinture et l'impression de substrats cellulosiques tels que le coton.

8. Utilisation d'une matière colorante réactive selon l'une quelconque des revendications 1 à 6, pour la teinture et l'impression de la laine.

9. Utilisation d'une matière colorante réactive selon l'une quelconque des revendications 1 à 6, pour la teinture et l'impression de polyamides tels que le nylon.

10. Utilisation d'une matière colorante réactive selon l'une quelconque des revendications 1 à 6, pour la teinture et l'impression de la soie.

11. Utilisation d'une matière colorante réactive selon l'une quelconque des revendications 1 à 6, pour la teinture et l'impression de la kératine telle que la laine et les cheveux.

12. Utilisation d'une matière colorante réactive selon l'une quelconque des revendications 1 à 6, pour la teinture et l'impression du cuir.

13. Utilisation d'une matière colorante réactive selon l'une quelconque des revendications 1 à 6, pour la teinture et l'impression du papier.

14. Composition de matière colorante comprenant le composé selon l'une quelconque des revendications 1 à 6.

15. Composition de matière colorante selon la revendication 14, où la composition se présente sous forme d'un mélange solide et comprend en outre un tampon acide.

16. Composition de matière colorante selon la revendication 14, où la composition se présente sous forme d'un liquide et comprend en outre de l'eau et un tampon acide.

17. Composition de matière colorante selon la revendication 16, où la composition se présente sous forme d'une pâte et comprend en outre de l'eau, un agent épaississant et un tampon acide.

18. Composition de matière colorante selon la revendication 14, 16 ou 17, où la composition a un pH d'environ 5 ou moins, de préférence d'environ 2 à environ 4, de préférence d'environ 2 à environ 3.
